# EUROPEAN PATENT APPLICATION

(11) **EP 3 786 755 A1**
(43) Date of publication of application: **03.03.2021**
(21) Application number: 19793617.2
(22) Date of filing: 26.04.2019
(51) Int. Cl.: G05D 1/02, G01S 5/20

(54) **AUTOMATIC RETURN DEVICE AND SYSTEM, AND AUTOMATIC RETURN METHOD FOR AUTOMATIC WALKING APPARATUS**

(30) Priority: 27.04.2018 CN 201810394961; 03.05.2018 CN 201810412363
(71) Applicant: Positec Power Tools (Suzhou) Co., Ltd, Suzhou, Jiangsu 215123 (CN)
(72) Inventor: PELLISARI, Francesco, Suzhou, Jiangsu 215123 (CN)
(74) Representative: Dentons UK and Middle East LLP
(86) International application number: PCT/CN2019/084565
(87) International publication number: WO 2019/206282

(57) **Abstract**

An automatic return system includes a charging station and an automatic traveling device. A sound wave transmitter is disposed on the charging station, and the automatic traveling device includes a sound wave receiver, a processor, and a controller. An automatic return method for an automatic traveling device is provided, the automatic return method including the following steps: controlling, by the controller when an automatic traveling device starts to return, a sound wave receiver to continuously detect sound waves in different directions transmitted by a sound wave transmitter; performing, by the processor, intensity analysis on the sound waves in different directions continuously detected by the sound wave receiver, and obtaining the direction of a sound wave with the highest sound intensity; and controlling, by the controller, a traveling direction of the automatic traveling device according to the direction of the sound wave with the highest sound intensity, so that the automatic traveling device returns to the charging station. According to the disclosure of the present invention, the return efficiency of the automatic traveling device can be improved, a return time can be reduced, and the method is simple and reliable.

## Description

This application claims priority to Chinese Patent Application No. 201810394961.3 on April 27, 2018, and Application No. 201810412363.4 on May 3, 2018, filed with the National Intellectual Property Administration, PRC, which is incorporated herein by reference in its entirety.

### BACKGROUND

### Technical Field

The present invention relates to an automatic return apparatus, an automatic return system, and a method for an automatic traveling device to return to a charging station.

### Related Art

With the continuous progress of computer technologies and artificial intelligence technologies, an automatic working system similar to an intelligent robot has started to gradually enter people's life. Companies such as Samsung and Electrolux all have developed fully-automatic vacuum cleaners and have put such vacuum cleaners on the market. Such a fully-automatic vacuum cleaner usually has a small volume, is integrated with an environmental sensor, a self-driving system, a vacuum cleaning system, a battery, and a charging system, and can autonomously cruise indoors without manual control. At low energy, the fully-automatic vacuum cleaner automatically returns to a charging station to be docked for charging, and then continues with cruising and vacuuming.

In addition, companies such as Husqvama Group have developed similar automatic lawnmowers, which are capable of automatically performing mowing and charging on a user's lawn without user intervention. Because the automatic working system does not require further management after being set once, users are freed from tedious, time-consuming, and labor-consuming housework such as cleaning and lawn maintenance. Therefore, the automatic working system becomes highly popular.

In the process of using an intelligent automatic vacuum cleaner or automatic lawnmower, when a battery level is insufficient, the automatic vacuum cleaner or the automatic lawnmower needs to return to a charging station for charging.

### SUMMARY

The present invention provides an automatic return apparatus that implements quick automatic return, an automatic return system, and a method for an automatic traveling device to return to a charging station. The automatic return system and the method for an automatic traveling device to return to a charging station are used, so that a more optimized return route can be obtained, thereby shortening a return time and saving electric energy.

To achieve the foregoing objective, a technical solution is an automatic return method for an automatic traveling device used for returning to a charging station, where the charging station is provided with a sound wave transmitter configured to transmit a sound wave, the automatic traveling device includes a sound wave receiver configured to receive a sound wave, and the automatic return method for an automatic traveling device includes the following steps:
S1. transmitting, by the sound wave transmitter, a sound wave in a direction of docking an automatic traveling device with a charging station;
S2. rotating and detecting, by the sound wave receiver, a direction A of a sound wave with the highest sound intensity, where the automatic traveling device travels in the direction A;
S3. as the automatic traveling device travels in the direction A, continuously rotating and detecting, by the sound wave receiver, a change in the direction of the sound wave with the highest sound intensity;
S4. when the sound wave receiver detects that the direction of the sound wave with the highest sound intensity changes from the direction A to a direction B, changing, by the automatic traveling device, a traveling direction, and traveling in the direction B; and
S5. repeating steps S3 and S4, where the sound wave receiver continuously rotates, and the automatic traveling device changes the traveling direction until the automatic traveling device travels in the direction of docking with the charging station.

Further, the sound wave transmitter omnidirectionally transmits sound waves.

Further, the sound wave transmitter directionally transmits a sound wave, the charging station is provided with a stepper motor, and the sound wave transmitter directionally transmits a sound wave by using angle information of the stepper motor.

Further, the angle information and synchronization information of the stepper motor are transmitted to the sound wave receiver or the automatic traveling device through radio.

Further, the sound wave transmitted by the sound wave transmitter is in a frequency range of 10 Khz to 80 Khz.

Further, the sound wave receiver is rotatably disposed, and the controller controls the sound wave receiver to rotate or swing to detect sound waves in different directions.

To achieve the foregoing objective, a technical solution is an automatic return method for an automatic traveling device, where the automatic traveling device automatically returns to a charging station, at least one sound wave transmitter and at least one sound wave receiver are disposed on the charging station and the automatic traveling device respectively, and a processor processes a sound wave received by the sound wave receiver, the automatic traveling device includes a controller for controlling the automatic traveling device to travel, the automatic traveling device works within a preset working range, and the automatic return method for an automatic traveling device includes the following steps:
continuously detecting, by the sound wave receiver when the automatic traveling device starts to return, sound waves in different directions transmitted by the sound wave transmitter;
performing, by the processor, intensity analysis on the sound waves in different directions continuously detected by the sound wave receiver, and obtaining the direction of a sound wave with the highest sound intensity; and
controlling, by the controller, a traveling direction of the automatic traveling device according to the direction of the sound wave with the highest sound intensity, so that the automatic traveling device returns to the charging station.

Further, the sound wave transmitter omnidirectionally transmits sound waves.

Further, the sound wave transmitter directionally transmits a sound wave and is connected to a stepper motor, and the sound wave transmitter directionally transmits a sound wave by using angle information of the stepper motor.

Further, the angle information and synchronization information of the stepper motor are transmitted to the sound wave receiver or the device with the sound wave receiver through radio.

Further, the sound wave transmitted by the sound wave transmitter is in a frequency range of 10 Khz to 80 Khz.

Further, the sound wave receiver is rotatably disposed, and the controller controls the sound wave receiver to rotate or swing to detect sound waves in different directions.

Further, the controlling, by the controller, a traveling direction of the automatic traveling device according to the direction of the sound wave with the highest sound intensity, so that the automatic traveling device returns to the charging station includes:
S11. controlling, by the controller, the automatic traveling device to travel in the direction of the sound wave with the highest sound intensity;
S12. as the automatic traveling device travels in the direction of the sound wave with the highest sound intensity, continuously detecting, by the sound wave receiver, sound waves in different directions transmitted by the sound wave transmitter;
S13. continuously performing, by the processor, intensity analysis on received sound waves, and determining, according to an analysis result, whether there is the direction of a new sound wave with the highest sound intensity;
S14. if there is the direction of a new sound wave with the highest sound intensity, controlling, by the controller, the automatic traveling device to travel in the direction of the new sound wave with the highest sound intensity; and
S15. repeating steps S12 to S14, where the sound wave receiver continuously rotates, and the automatic traveling device changes the traveling direction until the automatic traveling device travels in the direction of docking with the charging station.

To achieve the foregoing objective, a technical solution is an automatic return system, including a charging station and an automatic traveling device, the automatic return system including:
a sound wave transmitter, configured to transmit a sound wave;
a sound wave receiver, where the sound wave receiver continuously detects, when the automatic traveling device starts to return, sound waves in different directions transmitted by the sound wave transmitter;
a processor, configured to: perform intensity analysis on the sound waves in different directions continuously detected by the sound wave receiver, and obtain the direction of a sound wave with the highest sound intensity; and
a controller, configured to control a traveling direction of the automatic traveling device according to the direction of the sound wave with the highest sound intensity, so that the automatic traveling device returns to the charging station.

Further, the sound wave transmitter is a sound wave transmitter that omnidirectionally transmits sound waves.

Further, the sound wave transmitter is a sound wave transmitter that directionally transmits a sound wave, the automatic return system includes a stepper motor, and the sound wave transmitter directionally transmits a sound wave by using angle information of the stepper motor.

Further, the angle information and synchronization information of the stepper motor are transmitted to the sound wave receiver or the automatic traveling device through radio.

Further, the sound wave transmitted by the sound wave transmitter is in a frequency range of 10 Khz to 80 Khz.

Further, the sound wave transmitter is disposed on the charging station, the sound wave receiver is rotatably disposed on the automatic traveling device, and the controller controls the sound wave receiver to rotate or swing to detect sound waves in different directions.

To achieve the foregoing objective, a technical solution is an automatic return apparatus, including:
a housing;
a sound wave receiver, disposed on the housing, where when the automatic return apparatus starts to return, the sound wave receiver is configured to continuously detect external sound waves in different directions;
a processor, configured to: perform intensity analysis on the sound waves in different directions continuously detected by the sound wave receiver, and obtain the direction of a sound wave with the highest sound intensity; and
a controller, configured to control a traveling direction of the automatic return apparatus according to the direction of the sound wave with the highest sound intensity, so that the automatic return apparatus follows the direction of the sound wave with the highest sound intensity to travel.

Further, the sound wave receiver is rotatably disposed on the automatic traveling device, and the controller controls the sound wave receiver to rotate or swing to detect sound waves in different directions.

According to the automatic return apparatus, the automatic return system, and the method for an automatic traveling device to return to a charging station of the present invention, in the system and the method, intensity information of sound waves in different directions is obtained by processing the sound waves, the direction of a sound wave signal with the highest sound intensity is obtained, the automatic traveling device moves in the direction of the sound wave signal with the highest sound intensity, and continuously rotates and analyzes the intensity of received sound waves, and when there is the direction of a new sound wave signal with the highest sound intensity, the automatic traveling device moves to the direction of the new sound wave signal with the highest sound intensity. This process is repeated until the automatic traveling device eventually reaches a charging docking direction of a signal with the highest sound intensity. In this way, the automatic traveling device can return to a nearby charging station relatively intelligently, so that the mode is simple and reliable, thereby improving the return efficiency of the automatic traveling device and reducing a return time.

### BRIEF DESCRIPTION OF THE DRAWINGS

The present invention is further described below with reference to the accompanying drawings and embodiments.
FIG. 1 is a schematic diagram of an automatic traveling device facing a direction A of a sound wave with the highest sound intensity in an automatic return system according to the present invention.
FIG. 2 is a schematic diagram of an automatic traveling device finds that the direction of a sound wave with the highest sound intensity is changed from a direction A to a direction B in an automatic return system according to the present invention.
FIG. 3 is a schematic diagram of an automatic traveling device facing a direction B of a sound wave with the highest sound intensity in an automatic return system according to the present invention.
FIG. 4 is a schematic diagram of a traveling path along which an automatic traveling device returns to a charging station according to the direction of a sound wave with the highest sound intensity in an automatic return system according to the present invention.
FIG. 5 is a system block diagram of an automatic return apparatus according to the present invention.
FIG. 6 is a flowchart of a method for an automatic traveling device to return to a charging station according to the present invention.

| | | |
|---|---|---|
| 10. housing; | 20. sound wave receiver; | 30. movement module; |
| 40. working module; | 50. controller; | 60. processor; |
| 70. energy module; | 80. sound wave transmitter; | 100. automatic traveling device; and |
| 200. | charging station. | |

### DETAILED DESCRIPTION

The present invention provides an automatic return apparatus, an automatic return system, and a method for an automatic traveling device to return to a charging station. The automatic return system and the method for an automatic traveling device to return to a charging station are used, so that a more optimized return route can be obtained, thereby shortening a return time and saving electric energy.

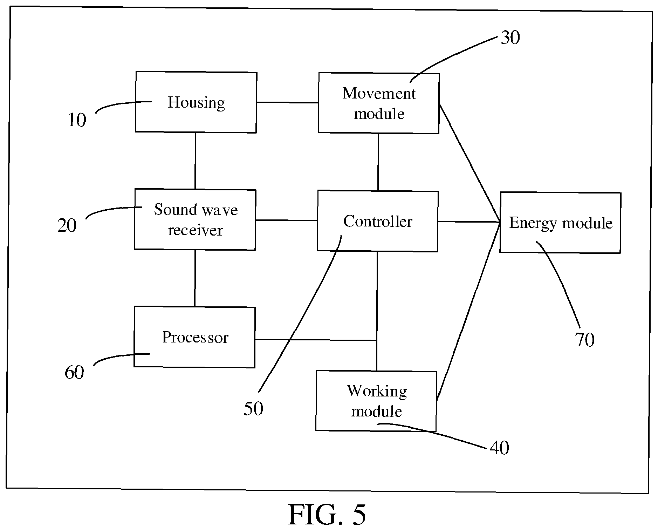

As shown in FIG. 5, the automatic return apparatus is an automatic traveling device. The automatic return apparatus includes a housing 10, a sound wave receiver 20, a movement module 30 located at the bottom of the housing 10, a working module 40 configured to perform work, a controller 50 configured to control a robotic lawnmower to automatically work and move, a processor 60, and an energy module 70 configured to supply energy to the robotic lawnmower.

The sound wave receiver 20 is disposed on the housing 10 of the automatic traveling device. The sound wave receiver 20 is configured to continuously detect sound waves in different directions. The processor 60 is configured to: perform intensity analysis on the sound waves in different directions continuously detected by the sound wave receiver, and obtain the direction of a sound wave with the highest sound intensity. The controller 50 is configured to control a traveling direction of the automatic traveling device according to the direction of the sound wave with the highest sound intensity, so that the automatic traveling device follows the direction of the sound wave with the highest sound intensity to travel, and eventually, the automatic traveling device is guided to reach a direction, facing a charging station, of a sound wave with the highest sound intensity.

In an embodiment, the sound wave receiver 20 is rotatably disposed on the automatic traveling device, and the controller 50 controls the sound wave receiver 20 to rotate or swing to detect sound waves in different directions. In an embodiment, the automatic traveling device includes a stepper motor (not shown). The stepper motor is configured to provide power for the sound wave receiver to rotate or swing, and the controller 50 may adjust an angle at which the sound wave receiver 20 rotates or swings.

In an embodiment, there may be at least two sound wave receivers 20. A plurality of sound wave receivers 20 are disposed, so that sound waves in different directions can be detected, thereby improving the working efficiency and detection accuracy. The at least two sound wave receivers 20 may be arranged to directionally receive sound wave signals. That is, the sound wave receivers 20 are fixedly mounted and cannot rotate or swing. Certainly, in another embodiment, the at least two sound wave receivers 20 may be alternatively arranged to rotate or swing.

In an embodiment, the sound wave receiver 20 is an electromagnetic driver, for example, a standard microphone, and is convenient to purchase, simple in structure, and convenient to use, thereby reducing use costs.

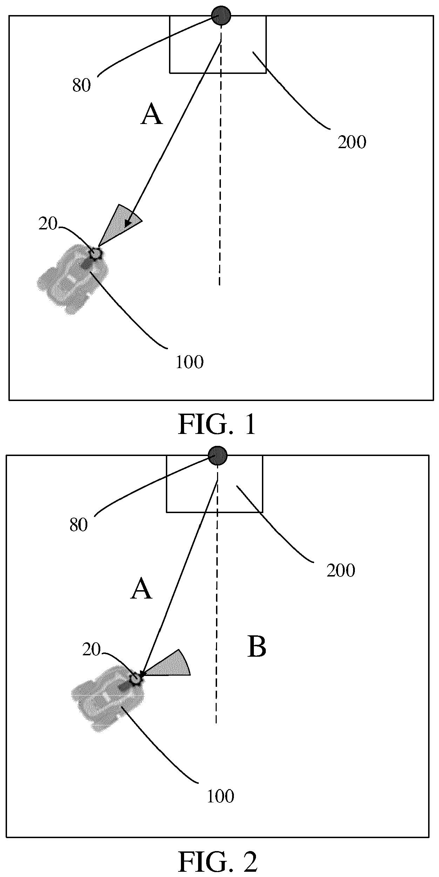

As shown in FIG. 1 to FIG. 3, the automatic return system includes an automatic traveling device 100 and a charging station 200. The automatic traveling device 100 is the foregoing automatic return apparatus. The automatic traveling device 100 travels within a preset working range, and the charging station 200 is used for the automatic traveling device 100 to park when the automatic traveling device does not work.

In an embodiment, a charging apparatus is disposed on the charging station 200 to replenish energy to the automatic traveling device 100 when there is insufficient energy. A direction with the highest sound intensity is the orientation of the charging station 200. In an embodiment, for an automatic traveling device 100 to be charged, when a sound wave is transmitted in the charging docking direction, the direction of the sound wave with the highest sound intensity is the charging docking direction. With such an arrangement, when the automatic traveling device 100 travels in the direction of the sound wave with the highest sound intensity, charging docking can be directly completed, thereby shortening a charging docking time, saving electric energy of the automatic traveling device 100, and improving the efficiency of return for charging. In other embodiments, the direction of the sound wave with the highest sound intensity may be used for determining the direction of the charging station 200. However, a specific charging docking direction may be implemented in another manner, for example, through guide wire docking or magnetic strip docking. The guide wire docking is specifically as follows: A guide wire is disposed in the charging docking direction. A signal is transmitted on the guide wire. A sensor is disposed on the automatic traveling device 100 to detect the signal transmitted on the guide wire, and determines a relative distance from the guide wire according to a condition of the signal. The automatic traveling device may then travel along the guide wire to eventually complete the charging docking. The transmitted signal may be a radio frequency (RF) signal. The magnetic strip docking is specifically as follows: A magnetic strip is disposed in the charging docking direction. A magnetic sensor is disposed on the automatic traveling device 100 to detect a magnetic signal of the magnetic strip, and determines a relative distance between the magnetic sensor and the magnetic strip according to a condition of the magnetic signal. The automatic traveling device may then travel along the magnetic strip to eventually complete the charging docking.

In other embodiments, the charging apparatus is not necessarily disposed on the charging station 200. Another device coupled to the automatic traveling device 100 may be optionally disposed on the charging station 200, or the charging station 200 is only used for the automatic traveling device 100 to park when the automatic traveling device does not work. The principle of returning of the automatic traveling device 100 is similarly as follows: Based on the intensity of sound waves, sound waves in different directions may be detected, intensity analysis is performed, the direction of a sound wave with the highest intensity is obtained, the automatic traveling device 100 is controlled according to the direction of the sound wave with the highest sound intensity to travel in the direction of the sound wave with the highest sound intensity, and eventually, the automatic traveling device 100 is guided to return to the position of the charging station 200. A direction with the highest sound intensity is the orientation of the charging station. If there is a docking requirement, a sound wave is transmitted in a docking direction, and a direction with the highest sound intensity is the docking direction.

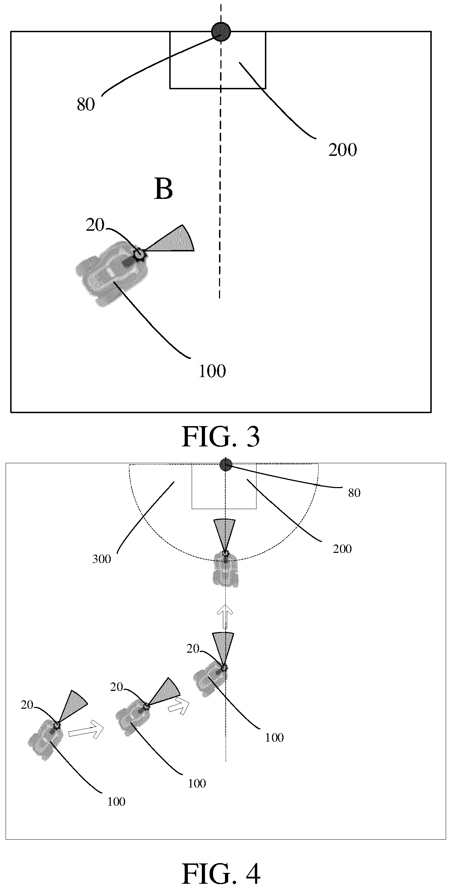

As shown in FIG. 4, the automatic return system includes a sound wave transmitter 80. The sound wave transmitter 80 has a sound wave coverage range 300. The range is a transmission range in a circumferential direction of sound waves, and does not represent a spread breadth of the sound waves. In an embodiment, a sound wave generation apparatus is disposed on the charging station 200. The sound wave generation apparatus includes at least one sound wave transmitter 80 configured to transmit a sound wave, and the sound wave transmitter 80 transmits a modulated sound wave signal. In an embodiment, the automatic return system includes a frequency adjustment unit, configured to adjust the frequency or amplitude of the sound wave transmitted by the sound wave transmitter 80. The frequency is adjusted to resolve problems about a distance, a boundary, vegetation, and the like. For example, when the distance is relatively long, a low-frequency sound wave may be chosen, and more sound wave data may be used. When the distance is relatively short, a high-frequency sound wave may be chosen.

When there are a plurality of sound wave transmitters 80, a control circuit may control the sound wave transmitters to transmit sound waves in turn, or after the problem of mutual interference between sound waves is alleviated or resolved, the control circuit may control the plurality of sound wave transmitters 80 to transmit sound waves simultaneously.

In an embodiment, the sound wave transmitter 80 is an omnidirectional sound wave transmitter that omnidirectionally transmits sound waves.

The omnidirectional sound wave transmitter has a wider transmission range and a larger transmission angle. In an embodiment, compared with the omnidirectional sound wave transmitter, the sound wave transmitter 80 transmits a sound wave at a fixed angle. That is, the sound wave transmitter is a directional sound wave transmitter that directionally transmits a sound wave. In this embodiment, the automatic return system may be provided with a stepper motor to adjust a rotation angle of the sound wave transmitter. The sound wave transmitter directionally transmits a sound wave by using angle information of the stepper motor, and the angle information and synchronization information of the stepper motor are transmitted to the sound wave receiver or the device with the sound wave receiver through radio. For example, if the sound wave receiver is disposed on the automatic traveling device, the angle information and the synchronization information of the stepper motor are transmitted to the automatic traveling device through radio. Besides signal transmission through radio, the angle information and the synchronization information of the stepper motor may also be transmitted in a modulated mode, and an information receiving end only needs to perform demodulation to obtain related information.

In an embodiment, the sound wave transmitted by the sound wave transmitter 80 is in a frequency range of 10 Khz to 80 Khz.

In an embodiment, the sound wave transmitter 80 is a standard loudspeaker, for example, a tweeter. The standard loudspeaker is convenient to purchase, simple in structure, and convenient to use, thereby reducing use costs. The sound wave receiver 20 corresponding to the sound wave transmitter 80 is an electromagnetic driver, for example, a standard microphone, and is convenient to purchase, simple in structure, and convenient to use, thereby reducing use costs.

In another embodiment, the sound wave transmitter 80 is an ultrasonic transmitter, and the corresponding sound wave receiver 20 is an ultrasonic receiver.

In another embodiment, there are a plurality of sound wave transmitters 80, and transmission angles of the plurality of sound wave transmitters 80 do not overlap or partially overlap, so that a transmission range of the sound wave transmitters 80 covers a travelable path for the automatic traveling device to return.

When there are a plurality of sound wave transmitters 80, sound waves transmitted by different sound wave transmitters 80 may be modulated by using a modulation method, to form sound wave transmitter codes with a distinguishing function. Modulated signals are then transmitted to a signal receiver or a device with the signal receiver, so that the position of a signal transmit end can be known after decoding by a receiving end. Alternatively, the synchronization information may be transmitted through radio.

The automatic return system further includes the sound wave receiver 20. The sound wave receiver 20 is disposed on the automatic traveling device 100. When the automatic traveling device 100 starts to return, the sound wave receiver 20 continuously detects sound waves in different directions transmitted by the sound wave transmitter 80.

Referring to FIG. 5, the automatic return system further includes a processor 60. The processor 60 is configured to: perform intensity analysis on the sound waves in different directions continuously detected by the sound wave receiver 20, and obtain the direction of a sound wave with the highest sound intensity. In an embodiment, the processor 60 is disposed on the automatic traveling device.

The automatic return system further includes a controller 50. The controller 50 controls the automatic traveling device to travel according to a predetermined route or a random route. When the automatic traveling device needs to return to the charging station due to factors such as low power, the controller 50 controls the sound wave receiver 20 to switch on and start to detect a sound wave signal transmitted by the sound wave transmitter 80. The processor 60 performs intensity analysis on a sound wave signal received by the sound wave receiver 20 and obtains the direction of a sound wave with the highest sound intensity. The controller 50 controls the automatic traveling device 100 according to the direction of the sound wave with the highest sound intensity to move forward, and the sound wave receiver 20 continuously detects a sound wave signal. The processor 60 performs the intensity analysis on the sound wave signal continuously received by the sound wave receiver 20 and determines whether there is the direction of a new sound wave with the highest sound intensity. If there is the direction of a new sound wave with the highest sound intensity, the controller 50 controls the automatic traveling device 100 to adjust the direction and travel in the direction of the new sound wave with the highest sound intensity. This process is repeated, and eventually, the automatic traveling device 100 is guided to reach a direction, facing the charging station 200, of a sound wave with the highest sound intensity, so that the automatic traveling device 100 returns to the charging station 200.

As shown in FIG. 1 to FIG. 3, the direction of the sound wave with the highest sound intensity at the beginning of detection by the automatic traveling device 100 is a direction A, and the controller 50 controls the automatic traveling device 100 to move forward in the direction A. With continuous detection of a sound wave signal by the sound wave receiver 20, the processor 60 performs processing to obtain the direction of the new sound wave with the highest sound intensity changes from the direction A to the direction B. Therefore, the controller 50 controls the automatic traveling device 100 to move forward in the direction B. Further, as shown in FIG. 4, with the continuous detection of a sound wave signal by the sound wave receiver 20, the controller 50 controls the automatic traveling device 100 to keep moving forward in the direction of the sound wave with the highest sound intensity, and eventually, the automatic traveling device 100 reaches the position of the charging station and travels in the charging docking direction.

In an embodiment, a charging apparatus is disposed on the charging station 200 to replenish energy to the automatic traveling device when there is insufficient energy. A direction with the highest sound intensity is the orientation of the charging station 200. In an embodiment, for an automatic traveling device 100 to be charged, the direction of the sound wave with the highest sound intensity may be directly set as the charging docking direction. With such an arrangement, when the automatic traveling device 100 travels in the direction of the sound wave with the highest sound intensity, charging docking can be directly completed, thereby shortening a charging docking time, saving electric energy of the automatic traveling device 100, and improving the efficiency of return for charging. In other embodiments, the direction of the sound wave with the highest sound intensity may be used for determining the direction of the charging station 200. However, a specific charging docking direction may be implemented in another manner, for example, through guide wire docking or magnetic strip docking. The guide wire docking is specifically as follows: A guide wire is disposed in the charging docking direction. A signal is transmitted on the guide wire. A sensor is disposed on the automatic traveling device 100 to detect the signal transmitted on the guide wire, and determines a relative distance between the sensor and the guide wire according to a condition of the signal. The automatic traveling device may then travel along the guide wire to eventually complete the charging docking. The transmitted signal may be an RF signal. The magnetic strip docking is specifically as follows: A magnetic strip is disposed in the charging docking direction. A magnetic sensor is disposed on the automatic traveling device 100 to detect a magnetic signal of the magnetic strip, and determines a relative distance between the magnetic sensor and the magnetic strip according to a condition of the magnetic signal. The automatic traveling device may then travel along the magnetic strip to eventually complete the charging docking.

In other embodiments, the charging apparatus is not necessarily disposed on the charging station 200. Another device coupled to the automatic traveling device may be optionally disposed on the charging station 200, or the charging station 200 is only used for the automatic traveling device 100 to park when the automatic traveling device does not work. The principle of returning of the automatic traveling device 100 is similarly as follows: Based on the intensity of sound waves, sound waves in different directions may be detected, intensity analysis is performed, the direction of a sound wave with the highest intensity is obtained, the automatic traveling device 100 is controlled according to the direction of the sound wave with the highest sound intensity to travel in the direction of the sound wave with the highest sound intensity, and eventually, the automatic traveling device 100 is guided to return to the position of the charging station 200. A direction with the highest sound intensity is the orientation of the charging station 200.

In an embodiment, the sound wave receiver 20 is rotatably disposed on the automatic traveling device 100, and the controller 50 controls the sound wave receiver 20 to rotate or swing to detect sound waves in different directions. In an embodiment, the automatic traveling device 100 includes a stepper motor (not shown). The stepper motor is configured to provide power for the sound wave receiver 20 to rotate or swing, and the controller 50 may adjust an angle at which the sound wave receiver rotates or swings. The sound wave receiver 20 may continuously rotate or swing.

In an embodiment, there may be only one sound wave receiver 20. The sound wave receiver 20 is rotatably or swingably connected to the automatic traveling device. Through rotation or swing, the sound wave receiver 20 has at least two different orientations, and therefore has at least two receiving angle ranges.

In an embodiment, there may be at least two sound wave receivers 20. A plurality of sound wave receivers 20 are disposed, so that sound waves in different directions can be detected, thereby improving the working efficiency and detection accuracy. The at least two sound wave receivers 20 may be arranged to directionally receive sound wave signals. That is, the sound wave receivers 20 are fixedly mounted and cannot rotate or swing. Certainly, in another embodiment, the at least two sound wave receivers 20 may be alternatively arranged to rotate or swing.

In another embodiment, the sound wave receiver 20 non-continuously rotates or swings. The sound wave receiver 20 is fixed to the automatic traveling device 100, and the controller 50 controls the automatic traveling device 100 to rotate one revolution or swing within a specific arc range each time the automatic traveling device moves forward by a distance when the automatic traveling device 100 returns, so that the automatic traveling device 100 receives sound wave signals in different orientations. The processor performs intensity analysis on a sound wave signal received by the sound wave receiver 20 and obtains the direction of a sound wave with the highest sound intensity. The controller 50 controls the automatic traveling device according to the direction of the sound wave with the highest sound intensity to move forward. The sound wave receiver 20 rotates one revolution or swings within a specific arc range when continuously moving forward by a distance to detect sound wave signals. The processor 60 performs intensity analysis on sound wave signals continuously received by the sound wave receiver 20 and determines whether there is the direction of a new sound wave with the highest sound intensity. If there is the direction of a new sound wave with the highest sound intensity, the controller 50 controls the automatic traveling device 100 to adjust the direction and travel in the direction of the new sound wave with the highest sound intensity. This process is repeated, and eventually, the automatic traveling device 100 is guided to reach a direction, facing the charging station 200, of a sound wave with the highest sound intensity, so that the automatic traveling device 100 returns to the charging station 200.

In an embodiment, the sound wave receiver 20 is an electromagnetic driver, for example, a standard microphone, and is convenient to purchase, simple in structure, and convenient to use, thereby reducing use costs.

For a solution of the at least two sound wave receivers 20, the at least two sound wave receivers 20 receive the same sound wave signal, and the same sound wave signal has a specific code. The at least two sound wave receivers 20 receive the sound wave signal with a delay time, and position information of the automatic traveling device may be obtained by using the delay time.

In an embodiment, the automatic return system may construct a spatial map by using the signals that are obtained on the charging station 200 and are transmitted by the sound wave transmitter 80 and the sound wave receiver 20. With the spatial map, the automatic traveling device 100 can select an optimal direction to travel, thereby shortening the return time, so that the automatic traveling device 100 has more accurate positioning. Alternatively, the speed of the automatic traveling device may be adjusted according to a distance between the automatic traveling device 100 and the charging station 200. When the automatic traveling device 100 is close to the charging station 200, the speed may be appropriately reduced. In addition, when the automatic traveling device 100 is close to the charging station 200, the rotation speed of a cutting deck (the cutting deck is one type of working module) may be optionally reduced or even a cutting deck may be turned off to pause the rotation of the cutting deck.

In an embodiment, the waveform of the sound wave transmitted by the sound wave transmitter 80 uses a triangular wave.

In an embodiment, the automatic traveling device 100 may be an automatic lawnmower or may be a self-moving robot cleaner or may be another automatic traveling device that needs to return or return for charging.

The automatic lawnmower is used as an example. In this embodiment, a sound wave receiver configured to receive a sound wave signal is disposed on the automatic lawnmower, and the sound wave receiver includes at least two receiving angle ranges. In this embodiment, there may be at least two sound wave receivers, and the at least two sound wave receivers have different orientations, so that the signal receiving angle ranges therebetween do not overlap or partially overlap. Certainly, in other embodiments, the automatic lawnmower may include only one sound wave receiver. The controller controls the sound wave receiver to rotate or swing within a specific arc range when the automatic lawnmower returns, so that the sound wave receiver receives sound wave signals in different orientations. For a case that the sound wave receiver is fixed to the automatic lawnmower, the controller controls the automatic lawnmower to rotate one revolution or swing within a specific arc range each time the automatic lawnmower moves forward by a distance when the automatic lawnmower returns, so that the automatic lawnmower receives sound wave signals in different orientations. The processor performs intensity analysis on a sound wave signal received by the sound wave receiver and obtains the direction of a sound wave with the highest sound intensity. The controller controls the automatic lawnmower according to the direction of the sound wave with the highest sound intensity to move forward, and the sound wave receiver continuously detects a sound wave signal. The processor performs intensity analysis on sound wave signals continuously received by the sound wave receiver and determines whether there is the direction of a new sound wave with the highest sound intensity. If there is the direction of a new sound wave with the highest sound intensity, the controller controls the automatic lawnmower to adjust the direction and travel in the direction of the new sound wave with the highest sound intensity. This process is repeated, and eventually, the automatic lawnmower is guided to reach a direction, facing a charging station, of a sound wave with the highest sound intensity, so that the automatic lawnmower returns to the charging station. Such an arrangement enables the automatic lawnmower to return to a nearby charging station, to prevent the automatic lawnmower from taking a long way to return, thereby improving the efficiency that the automatic lawnmower returns to the charging station and improving the probability of docking the automatic lawnmower with the charging station.

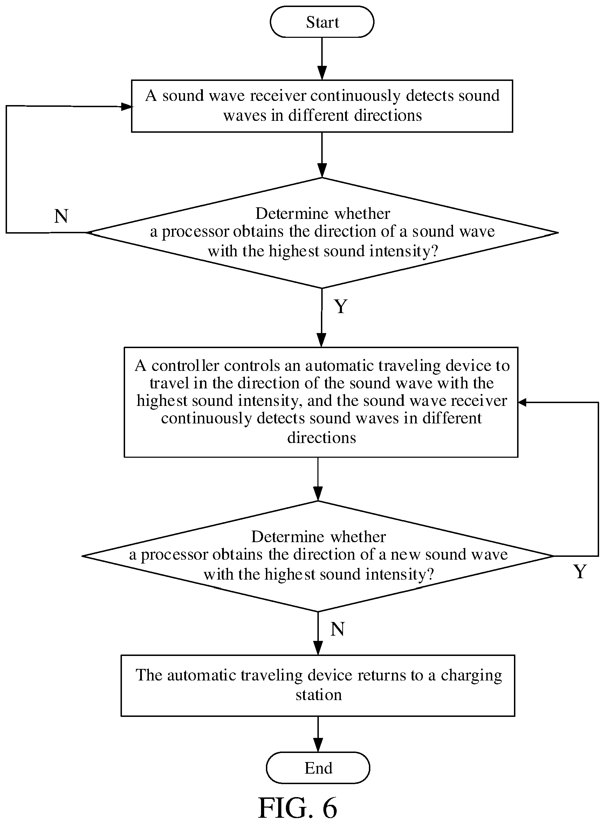

As shown in FIG. 6, a first automatic return method for an automatic traveling device is further provided, and the method is used for guiding the automatic traveling device to return to the charging station. The charging station is provided with a sound wave transmitter configured to transmit a sound wave, and the automatic traveling device includes a sound wave receiver configured to receive a sound wave, a processor configured to process a received sound wave, and a controller. The automatic traveling device works within a preset working range. The automatic return method for an automatic traveling device includes the following steps:
controlling, by the controller when the automatic traveling device starts to return, the sound wave receiver to continuously detect sound waves in different directions transmitted by the sound wave transmitter;
performing, by the processor, intensity analysis on the sound waves in different directions continuously detected by the sound wave receiver, and obtaining the direction of a sound wave with the highest sound intensity; and
controlling, by the controller, a traveling direction of the automatic traveling device according to the direction of the sound wave with the highest sound intensity, so that the automatic traveling device returns to the charging station.

As shown in FIG. 6, in an embodiment of the first automatic return method for an automatic traveling device, the controlling, by the controller, a traveling direction of the automatic traveling device according to the direction of the sound wave with the highest sound intensity, so that the automatic traveling device returns to the charging station includes:
S11. controlling, by the controller, the automatic traveling device to travel in the direction of the sound wave with the highest sound intensity;
S12. as the automatic traveling device travels in the direction of the sound wave with the highest sound intensity, continuously detecting, by the sound wave receiver, sound waves in different directions transmitted by the sound wave transmitter;
S13. continuously performing, by the processor, intensity analysis on received sound waves, and determining, according to an analysis result, whether there is the direction of a new sound wave with the highest sound intensity;
S14. if there is the direction of a new sound wave with the highest sound intensity, controlling, by the controller, the automatic traveling device to travel in the direction of the new sound wave with the highest sound intensity; and
S15. repeating steps S12 to S14, where the sound wave receiver continuously rotates, and the automatic traveling device changes the traveling direction until the automatic traveling device travels in the direction of docking with the charging station.

In the automatic return method for an automatic traveling device, the processor is configured to: perform intensity analysis on the sound waves in different directions continuously detected by the sound wave receiver, and obtain the direction of a sound wave with the highest sound intensity.

In the automatic return method for an automatic traveling device, the controller controls the automatic traveling device to travel according to a predetermined route or a random route. When the automatic traveling device needs to return to the charging station due to factors such as low power, the controller controls the sound wave receiver to switch on and start to detect a sound wave signal transmitted by the sound wave transmitter. The processor performs intensity analysis on a sound wave signal received by the sound wave receiver and obtains the direction of a sound wave with the highest sound intensity. The controller controls the automatic traveling device according to the direction of the sound wave with the highest sound intensity to move forward, and the sound wave receiver continuously detects a sound wave signal. The processor performs the intensity analysis on the sound wave signal continuously received by the sound wave receiver and determines whether there is the direction of a new sound wave with the highest sound intensity. If there is the direction of a new sound wave with the highest sound intensity, the controller controls the automatic traveling device to adjust the direction and travel in the direction of the new sound wave with the highest sound intensity. This process is repeated, and eventually, the automatic traveling device is guided to reach a direction, facing a charging station, of a sound wave with the highest sound intensity, so that the automatic traveling device returns to the charging station.

In an embodiment of the first automatic return method for an automatic traveling device, a charging apparatus is disposed on the charging station to replenish energy to the automatic traveling device when there is insufficient energy. A direction with the highest sound intensity is the orientation of the charging station. In an embodiment, for an automatic traveling device to be charged, the direction of the sound wave with the highest sound intensity may be directly set as the charging docking direction. With such an arrangement, when the automatic traveling device travels in the direction of the sound wave with the highest sound intensity, charging docking can be directly completed, thereby shortening a charging docking time, saving electric energy of the automatic traveling device, and improving the efficiency of return for charging. In other embodiments, the direction of the sound wave with the highest sound intensity may be used for determining the direction of the charging station 200. However, a specific charging docking direction may be implemented in another manner, for example, through guide wire docking or magnetic strip docking. The guide wire docking is specifically as follows: A guide wire is disposed in the charging docking direction. A signal is transmitted on the guide wire. A sensor is disposed on the automatic traveling device 100 to detect the signal transmitted on the guide wire, and determines a relative distance between the sensor and the guide wire according to a condition of the signal. The automatic traveling device may then travel along the guide wire to eventually complete the charging docking. The transmitted signal may be an RF signal. The magnetic strip docking is specifically as follows: A magnetic strip is disposed in the charging docking direction. A magnetic sensor is disposed on the automatic traveling device 100 to detect a magnetic signal of the magnetic strip, and determines a relative distance between the magnetic sensor and the magnetic strip according to a condition of the magnetic signal. The automatic traveling device may then travel along the magnetic strip to eventually complete the charging docking.

In other embodiments of the first automatic return method for an automatic traveling device, the charging apparatus is not necessarily disposed on the charging station. Another device coupled to the automatic traveling device may be optionally disposed on the charging station, or the charging station is only used for the automatic traveling device to park when the automatic traveling device does not work. The principle of returning of the automatic traveling device is similarly as follows: Based on the intensity of sound waves, sound waves in different directions may be detected, intensity analysis is performed, the direction of a sound wave with the highest intensity is obtained, the automatic traveling device is controlled according to the direction of the sound wave with the highest sound intensity to travel in the direction of the sound wave with the highest sound intensity, and eventually, the automatic traveling device is guided to return to the position of the charging station. A direction with the highest sound intensity is the orientation of the charging station.

In an embodiment of the first automatic return method for an automatic traveling device, the sound wave transmitter omnidirectionally transmits sound waves.

The sound wave transmitter transmits a sound wave signal with a specific frequency or amplitude. The sound wave transmitter may transmit sound wave signals with different frequencies or amplitudes. In an embodiment, the sound wave transmitted by the sound wave transmitter is in a frequency range of 10 Khz to 80 Khz.

In an embodiment of the first automatic return method for an automatic traveling device, the sound wave transmitter is a standard loudspeaker, for example, a tweeter. The standard loudspeaker is convenient to purchase, simple in structure, and convenient to use, thereby reducing use costs.

In another embodiment, the sound wave transmitter 80 is an ultrasonic transmitter.

When there are a plurality of sound wave transmitters, a control circuit may control the sound wave transmitters to transmit sound waves in turn, or after the problem of mutual interference between sound waves is alleviated or resolved, the control circuit may control the plurality of sound wave transmitters to transmit sound waves simultaneously.

When there are a plurality of sound wave transmitters 80, sound waves transmitted by different sound wave transmitters 80 may be modulated by using a modulation method, to form sound wave transmitter codes with a distinguishing function. Modulated signals are then transmitted to a signal receiver or a device with the signal receiver, so that the position of a signal transmit end can be known after decoding by a receiving end. Alternatively, the synchronization information may be transmitted through radio.

The omnidirectional sound wave transmitter has a wider transmission range and a larger transmission angle. In an embodiment of the automatic return method for an automatic traveling device, compared with the omnidirectional sound wave transmitter, the sound wave transmitter transmits a sound wave at a fixed angle. That is, the sound wave transmitter is a directional sound wave transmitter that directionally transmits a sound wave. In this embodiment, a stepper motor may be provided to adjust a rotation angle of the sound wave transmitter. The sound wave transmitter directionally transmits a sound wave by using angle information of the stepper motor, and the angle information and synchronization information of the stepper motor are transmitted to the sound wave receiver or the device with the sound wave receiver through radio. For example, if the sound wave receiver is disposed on the automatic traveling device, the angle information and the synchronization information of the stepper motor are transmitted to the automatic traveling device through radio. Besides signal transmission through radio, the angle information and the synchronization information of the stepper motor may also be transmitted in a modulated mode, and an information receiving end only needs to perform demodulation to obtain related information.

In an embodiment of the first automatic return method for an automatic traveling device, the sound wave receiver is rotatably disposed on the automatic traveling device, and the controller controls the sound wave receiver to rotate or swing to detect sound waves in different directions. In an embodiment, the automatic traveling device includes a stepper motor. The stepper motor is configured to provide power for the sound wave receiver to rotate or swing, and the controller may adjust an angle at which the sound wave receiver rotates or swings. The sound wave receiver may continuously rotate or swing.

In an embodiment of the first automatic return method for an automatic traveling device, there may be only one sound wave receiver. The sound wave receiver is rotatably or swingably connected to the automatic traveling device. Through rotation or swing, the sound wave receiver has at least two different orientations, and therefore has at least two receiving angle ranges.

In an embodiment of the first automatic return method for an automatic traveling device, there are at least two sound wave receivers. A plurality of sound wave receivers are disposed, so that sound waves in different directions can be detected, thereby improving the working efficiency and detection accuracy. The at least two sound wave receivers may be arranged to directionally receive sound wave signals. That is, the sound wave receivers are fixedly mounted and cannot rotate or swing. Certainly, in another embodiment, the at least two sound wave receivers may be alternatively arranged to rotate or swing.

In another embodiment of the first automatic return method for an automatic traveling device, the sound wave receiver non-continuously rotates or swings. The sound wave receiver is fixed to the automatic traveling device, and the controller controls the automatic traveling device to rotate one revolution or swing within a specific arc range each time the automatic traveling device moves forward by a distance when the automatic traveling device returns, so that the automatic traveling device receives sound wave signals in different orientations. The processor performs intensity analysis on a sound wave signal received by the sound wave receiver and obtains the direction of a sound wave with the highest sound intensity. The controller controls the automatic traveling device according to the direction of the sound wave with the highest sound intensity to move forward. The sound wave receiver rotates one revolution or swings within a specific arc range when continuously moving forward by a distance to detect sound wave signals. The processor performs intensity analysis on sound wave signals continuously received by the sound wave receiver and determines whether there is the direction of a new sound wave with the highest sound intensity. If there is the direction of a new sound wave with the highest sound intensity, the controller controls the automatic traveling device to adjust the direction and travel in the direction of the new sound wave with the highest sound intensity. This process is repeated, and eventually, the automatic traveling device is guided to reach a direction, facing a charging station, of a sound wave with the highest sound intensity, so that the automatic traveling device returns to the charging station.

In an embodiment of the first automatic return method for an automatic traveling device, the sound wave transmitter 80 transmits a sound wave in a charging docking direction, and the direction of the sound wave with the highest sound intensity is the charging docking direction of the charging station.

In an embodiment of the first automatic return method for an automatic traveling device, the sound wave transmitter is a standard loudspeaker. The standard loudspeaker is convenient to purchase, simple in structure, and convenient to use, thereby reducing use costs.

In another embodiment, the sound wave transmitter 80 is an ultrasonic transmitter.

In an embodiment, the waveform of the sound wave transmitted by the sound wave transmitter uses a triangular wave.

In an embodiment of the first automatic return method for an automatic traveling device, the sound wave receiver is an electromagnetic driver, for example, a standard microphone, and is convenient to purchase, simple in structure, and convenient to use, thereby reducing use costs.

In an embodiment of the first automatic return method for an automatic traveling device, the automatic traveling device selects an optimal return direction according to the spatial map, thereby shortening the return time, so that the automatic traveling device has more accurate positioning. Alternatively, the speed of the automatic traveling device may be adjusted according to a distance between the automatic traveling device and the charging station. When the automatic traveling device is close to the charging station, the speed may be appropriately reduced. In addition, when the automatic traveling device is close to the charging station, the rotation speed of a cutting deck may be optionally reduced or even a cutting deck may be turned off to pause the rotation of the cutting deck.

In an embodiment, the waveform of the sound wave transmitted by the sound wave transmitter uses a triangular wave.

In an embodiment of the first automatic return method for an automatic traveling device, the automatic traveling device includes a frequency adjustment unit, configured to adjust the frequency of the sound wave transmitted by the sound wave transmitter.

In an embodiment of the first automatic return method for an automatic traveling device, there are at least two sound wave receivers. The processor obtains position information according to a coding scheme specified by the plurality of sound wave receivers and a delay time among the plurality of sound wave receivers. In the process of transmitting a sound wave, the sound wave transmitter transmits sound waves by using different frequencies.

For a solution of the at least two sound wave receivers, the at least two sound wave receivers receive the same sound wave signal, and the same sound wave signal has a specific code. The at least two sound wave receivers receive the sound wave signal with a delay time, and position information of the automatic traveling device may be obtained by using the delay time.

The present invention further provides a second automatic return method for an automatic traveling device. As shown in FIG. 1 to FIG. 4, FIG. 1 to FIG. 4 show a return path in the automatic return method for an automatic traveling device according to this embodiment. The automatic return method for an automatic traveling device is used for returning to a charging station. The charging station is provided with a sound wave transmitter configured to transmit a sound wave, and the automatic traveling device includes a sound wave receiver configured to receive a sound wave. The automatic return method for an automatic traveling device includes the following steps:
S1. transmitting, by the sound wave transmitter, a sound wave in a direction of docking an automatic traveling device with a charging station;
S2. rotating and detecting, by the sound wave receiver, a direction A of a sound wave with the highest sound intensity, where the automatic traveling device travels in the direction A;
S3. as the automatic traveling device travels in the direction A, continuously rotating and detecting, by the sound wave receiver, a change in the direction of the sound wave with the highest sound intensity;
S4. when the sound wave receiver detects that the direction of the sound wave with the highest sound intensity changes from the direction A to a direction B, changing, by the automatic traveling device, a traveling direction, and traveling in the direction B; and
S5. repeating steps S3 and S4, where the sound wave receiver continuously rotates, and the automatic traveling device changes the traveling direction until the automatic traveling device travels in the direction of docking with the charging station.

In an embodiment of the second automatic return method for an automatic traveling device, the sound wave transmitter transmits a sound wave in a charging docking direction, and the direction of the sound wave with the highest sound intensity is the charging docking direction of the charging station.

In an embodiment of the second automatic return method for an automatic traveling device, the sound wave transmitter omnidirectionally transmits sound waves. A rotation angle of the sound wave transmitter may be adjusted by using the stepper motor.

The sound wave transmitter transmits a sound wave signal with a specific frequency or amplitude. The sound wave transmitter may transmit sound wave signals with different frequencies or amplitudes. In an embodiment, the sound wave transmitted by the sound wave transmitter is in a frequency range of 20 Khz to 24 Khz.

In an embodiment of the second automatic return method for an automatic traveling device, the sound wave transmitter is a standard loudspeaker, for example, a tweeter. The standard loudspeaker is convenient to purchase, simple in structure, and convenient to use, thereby reducing use costs.

In another embodiment, the sound wave transmitter 80 is an ultrasonic transmitter.

When there are a plurality of sound wave transmitters, a control circuit may control the sound wave transmitters to transmit sound waves in turn, or after the problem of mutual interference between sound waves is alleviated or resolved, the control circuit may control the plurality of sound wave transmitters to transmit sound waves simultaneously.

The omnidirectional sound wave transmitter has a wider transmission range and a larger transmission angle. In an embodiment of the second automatic return method for an automatic traveling device, compared with the omnidirectional sound wave transmitter, the sound wave transmitter transmits a sound wave at a fixed angle. That is, the sound wave transmitter is a directional sound wave transmitter that directionally transmits a sound wave. In this embodiment, a stepper motor may also be provided to adjust a transmission angle of the sound wave transmitter.

The automatic traveling device includes a processor processing a received sound wave and a controller. In an embodiment of the second automatic return method for an automatic traveling device, the sound wave receiver is rotatably disposed on the automatic traveling device, and the controller controls the sound wave receiver to rotate or swing to detect sound waves in different directions. In an embodiment, the automatic traveling device includes a stepper motor. The stepper motor is configured to provide power for the sound wave receiver to rotate or swing, and the controller may adjust an angle at which the sound wave receiver rotates or swings. The sound wave receiver may continuously rotate or swing.

In an embodiment of the second automatic return method for an automatic traveling device, there may be only one sound wave receiver. The sound wave receiver is rotatably or swingably connected to the automatic traveling device. Through rotation or swing, the sound wave receiver has at least two different orientations, and therefore has at least two receiving angle ranges.

In an embodiment of the second automatic return method for an automatic traveling device, there are at least two sound wave receivers. A plurality of sound wave receivers are disposed, so that sound waves in different directions can be detected, thereby improving the working efficiency and detection accuracy. The at least two sound wave receivers may be arranged to directionally receive sound wave signals. That is, the sound wave receivers are fixedly mounted and cannot rotate or swing. Certainly, in another embodiment, the at least two sound wave receivers may be alternatively arranged to rotate or swing.

In another embodiment of the second automatic return method for an automatic traveling device, the sound wave receiver non-continuously rotates or swings. The sound wave receiver is fixed to the automatic traveling device, and the controller controls the automatic traveling device to rotate one revolution or swing within a specific arc range each time the automatic traveling device moves forward by a distance when the automatic traveling device returns, so that the automatic traveling device receives sound wave signals in different orientations. The processor performs intensity analysis on a sound wave signal received by the sound wave receiver and obtains the direction of a sound wave with the highest sound intensity. The controller controls the automatic traveling device according to the direction of the sound wave with the highest sound intensity to move forward. The sound wave receiver rotates one revolution or swings within a specific arc range when continuously moving forward by a distance to detect sound wave signals. The processor performs intensity analysis on sound wave signals continuously received by the sound wave receiver and determines whether there is the direction of a new sound wave with the highest sound intensity. If there is the direction of a new sound wave with the highest sound intensity, the controller controls the automatic traveling device to adjust the direction and travel in the direction of the new sound wave with the highest sound intensity. This process is repeated, and eventually, the automatic traveling device is guided to reach a direction, facing a charging station, of a sound wave with the highest sound intensity, so that the automatic traveling device returns to the charging station.

In an embodiment of the second automatic return method for an automatic traveling device, the sound wave transmitter is a standard loudspeaker, for example, a tweeter. The standard loudspeaker is convenient to purchase, simple in structure, and convenient to use, thereby reducing use costs.

In another embodiment, the sound wave transmitter 80 is an ultrasonic transmitter.

In an embodiment, the waveform of the sound wave transmitted by the sound wave transmitter uses a triangular wave.

In an embodiment of the second automatic return method for an automatic traveling device, the sound wave receiver is an electromagnetic driver, for example, a standard microphone, and is convenient to purchase, simple in structure, and convenient to use, thereby reducing use costs.

In an embodiment of the second automatic return method for an automatic traveling device, the automatic traveling device selects an optimal return direction according to the spatial map, thereby shortening the return time, so that the automatic traveling device has more accurate positioning. Alternatively, the speed of the automatic traveling device may be adjusted according to a distance between the automatic traveling device and the charging station. When the automatic traveling device is close to the charging station, the speed may be appropriately reduced. In addition, when the automatic traveling device is close to the charging station, the rotation speed of a cutting deck may be optionally reduced or even a cutting deck may be turned off to pause the rotation of the cutting deck.

In an embodiment, the waveform of the sound wave transmitted by the sound wave transmitter uses a triangular wave.

In an embodiment of the second automatic return method for an automatic traveling device, the automatic traveling device includes a frequency adjustment unit, configured to adjust the frequency of the sound wave transmitted by the sound wave transmitter.

In an embodiment of the second automatic return method for an automatic traveling device, there are at least two sound wave receivers. The processor obtains position information according to a coding scheme specified by the plurality of sound wave receivers and a delay time among the plurality of sound wave receivers. In the process of transmitting a sound wave, the sound wave transmitter transmits sound waves by using different frequencies.

For a solution of the at least two sound wave receivers, the at least two sound wave receivers receive the same sound wave signal, and the same sound wave signal has a specific code. The at least two sound wave receivers receive the sound wave signal with a delay time, and position information of the automatic traveling device may be obtained by using the delay time.

A person skilled in the art can be known that, the specific structure in the automatic return system and the method for an automatic traveling device to return to a charging station may have many variations, but main technical features in the technical solutions adopted in the variations are the same as or similar to those of the present invention, and are all intended to fall within the scope of the present invention.

## Claims

1. An automatic return method for an automatic traveling device, used for returning to a charging station, wherein the charging station is provided with a sound wave transmitter configured to transmit a sound wave, the automatic traveling device comprises a sound wave receiver configured to receive a sound wave, and the automatic return method for an automatic traveling device comprises the following steps:
S1. transmitting, by the sound wave transmitter, a sound wave in a direction of docking an automatic traveling device with a charging station;
S2. rotating and detecting, by the sound wave receiver, a direction A of a sound wave with the highest sound intensity, wherein the automatic traveling device travels in the direction A;
S3. as the automatic traveling device travels in the direction A, continuously rotating and detecting, by the sound wave receiver, a change in the direction of the sound wave with the highest sound intensity;
S4. when the sound wave receiver detects that the direction of the sound wave with the highest sound intensity changes from the direction A to a direction B, changing, by the automatic traveling device, a traveling direction, and traveling in the direction B; and
S5. repeating steps S3 and S4, wherein the sound wave receiver continuously rotates, and the automatic traveling device changes the traveling direction until the automatic traveling device travels in the direction of docking with the charging station.

2. The automatic return method for an automatic traveling device according to claim 1, wherein the sound wave transmitter omnidirectionally transmits sound waves.

3. The automatic return method for an automatic traveling device according to claim 1, wherein the sound wave transmitter directionally transmits a sound wave and is connected to a stepper motor, and the sound wave transmitter directionally transmits a sound wave by using angle information of the stepper motor.

4. The automatic return method for an automatic traveling device according to claim 3, wherein the angle information and synchronization information of the stepper motor are transmitted to the sound wave receiver or the device with the sound wave receiver through radio.

5. The automatic return method for an automatic traveling device according to claim 1, wherein the sound wave transmitted by the sound wave transmitter is in a frequency range of 10 Khz to 80 Khz.

6. The automatic return method for an automatic traveling device according to claim 1, wherein the sound wave receiver is rotatably disposed, and the sound wave receiver rotates or swings to detect sound waves in different directions.

7. An automatic return method for an automatic traveling device, wherein the automatic traveling device automatically returns to a charging station, at least one sound wave transmitter and at least one sound wave receiver are disposed on the charging station and the automatic traveling device respectively, a processor processes a sound wave received by the sound wave receiver, the automatic traveling device comprises a controller for controlling the automatic traveling device to travel, the automatic traveling device works within a preset working range, and the automatic return method for an automatic traveling device comprises the following steps:
continuously detecting, by the sound wave receiver when the automatic traveling device starts to return, sound waves in different directions transmitted by the sound wave transmitter;
performing, by the processor, intensity analysis on the sound waves in different directions continuously detected by the sound wave receiver, and obtaining the direction of a sound wave with the highest sound intensity; and
controlling, by the controller, a traveling direction of the automatic traveling device according to the direction of the sound wave with the highest sound intensity, so that the automatic traveling device returns to the charging station.

8. The automatic return method for an automatic traveling device according to claim 7, wherein the sound wave transmitter omnidirectionally transmits sound waves.

9. The automatic return method for an automatic traveling device according to claim 7, wherein the sound wave transmitter directionally transmits a sound wave and is connected to a stepper motor, and the sound wave transmitter directionally transmits a sound wave by using angle information of the stepper motor.

10. The automatic return method for an automatic traveling device according to claim 9, wherein the angle information and synchronization information of the stepper motor are transmitted to the sound wave receiver or the device with the sound wave receiver through radio.

11. The automatic return method for an automatic traveling device according to claim 7, wherein the sound wave transmitted by the sound wave transmitter is in a frequency range of 10 Khz to 80 Khz.

12. The automatic return method for an automatic traveling device according to claim 7, wherein the sound wave receiver is rotatably disposed, and the controller controls the sound wave receiver to rotate or swing to detect sound waves in different directions.

13. The automatic return method for an automatic traveling device according to claim 7, wherein the controlling, by the controller, a traveling direction of the automatic traveling device according to the direction of the sound wave with the highest sound intensity, so that the automatic traveling device returns to the charging station comprises:
S11. controlling, by the controller, the automatic traveling device to travel in the direction of the sound wave with the highest sound intensity;
S12. as the automatic traveling device travels in the direction of the sound wave with the highest sound intensity, continuously detecting, by the sound wave receiver, sound waves in different directions transmitted by the sound wave transmitter;
S13. continuously performing, by the processor, intensity analysis on received sound waves, and determining, according to an analysis result, whether there is the direction of a new sound wave with the highest sound intensity;
S14. if there is the direction of a new sound wave with the highest sound intensity, controlling, by the controller, the automatic traveling device to travel in the direction of the new sound wave with the highest sound intensity; and
S15. repeating steps S12 to S14, wherein the sound wave receiver continuously rotates, and the automatic traveling device changes the traveling direction until the automatic traveling device travels in the direction of docking with the charging station.

14. An automatic return system, comprising a charging station and an automatic traveling device, the automatic return system comprising:
a sound wave transmitter, configured to transmit a sound wave;
a sound wave receiver, wherein the continuously detect, when the automatic traveling device starts to return, sound waves in different directions transmitted by the sound wave transmitter;
a processor, configured to: perform intensity analysis on the sound waves in different directions continuously detected by the sound wave receiver, and obtain the direction of a sound wave with the highest sound intensity; and
a controller, configured to control a traveling direction of the automatic traveling device according to the direction of the sound wave with the highest sound intensity, so that the automatic traveling device returns to the charging station.

15. The automatic return system according to claim 14, wherein the sound wave transmitter is a sound wave transmitter that omnidirectionally transmits sound waves.

16. The automatic return system according to claim 14, wherein the sound wave transmitter is a sound wave transmitter that directionally transmits a sound wave, the automatic return system comprises a stepper motor, and the sound wave transmitter directionally transmits a sound wave by using angle information of the stepper motor.

17. The automatic return system according to claim 16, wherein the angle information and synchronization information of the stepper motor are transmitted to the sound wave receiver or the device with the sound wave receiver through radio.

18. The automatic return system according to claim 14, wherein the sound wave transmitted by the sound wave transmitter is in a frequency range of 10 Khz to 80 Khz.

19. The automatic return system according to claim 14, wherein the sound wave transmitter is disposed on the charging station, the sound wave receiver is rotatably disposed on the automatic traveling device, and the controller controls the sound wave receiver to rotate or swing to detect sound waves in different directions.

20. An automatic return apparatus, comprising:
a housing;
a sound wave receiver, disposed on the housing, wherein when the automatic return apparatus starts to return, the sound wave receiver is configured to continuously detect external sound waves in different directions;
a processor, configured to: perform intensity analysis on the sound waves in different directions continuously detected by the sound wave receiver, and obtain the direction of a sound wave with the highest sound intensity; and
a controller, configured to control a traveling direction of the automatic return apparatus according to the direction of the sound wave with the highest sound intensity, so that the automatic return apparatus follows the direction of the sound wave with the highest sound intensity to travel.

21. The automatic return apparatus according to claim 20, wherein the sound wave receiver is rotatably disposed on the automatic return apparatus, and the controller controls the sound wave receiver to rotate or swing to detect sound waves in different directions.
